# EUROPÄISCHE PATENTSCHRIFT

(11) **EP 3 245 559 B1**
(45) Veröffentlichungstag und Bekanntmachung des Hinweises auf die Patenterteilung: **10.06.2020**
(21) Anmeldenummer: 15817127.2
(22) Anmeldetag: 13.12.2015
(51) Int. Cl.: G02F 1/21, C09K 19/04, C09K 19/12, C09K 19/56, G02B 26/00, G02B 5/28, G02F 1/1337, C09K 19/00, G02F 1/139, C08F 220/22

(54) **ELEKTRISCH STEUERBARER INTERFERENZFARBFILTER UND DESSEN VERWENDUNG**
ELECTRICALLY CONTROLLED INTERFERENCE COLOR FILTER AND THE USE THEREOF
FILTRE DICHROÏQUE À COMMANDE ÉLECTRIQUE ET UTILISATION DUDIT FILTRE

(30) Priorität: 14.01.2015 DE 102015200488
(43) Veröffentlichungstag der Anmeldung: 22.11.2017
(73) Patentinhaber: Fraunhofer-Gesellschaft zur Förderung der angewandten Forschung e.V., 80686 München (DE)
(72) Erfinder: SEEBOTH, Arno, 12557 Berlin (DE); LÖTZSCH, Detlef, Berlin 14059 (DE); RABE, Christian, 10439 Berlin (DE); FRACH, Peter, 01454 Radeberg (DE); GITTNER, Matthias, 01097 Dresden (DE); BARTZSCH, Hagen, 01309 Dresden (DE); DE LA BARRÉ, René, 09648 Mittweida (DE); BARTMANN, Roland, 14059 Berlin (DE); VERGÖHL, Michael, 38162 Cremlingen (DE); BRUNS, Stefan, 38162 Cremlingen (DE); NEUBERT, Thomas, 38442 Wolfsburg (DE); FISCHER, Johanna, 97346 Hellmitzheim (DE); SCHOTTNER, Gerhard, 91560 Heilsbronn (DE)
(74) Vertreter: Pfenning, Meinig & Partner mbB
(86) Internationale Anmeldenummer: PCT/EP2015/079512
(87) Internationale Veröffentlichungsnummer: WO 2016/113051

(56) Entgegenhaltungen:
- EP-A2- 0 357 319
- DE-A1- 2 652 223
- US-A- 5 425 115
- US-A1- 2002 071 079
- US-A1- 2009 322 971
- US-B1- 6 181 403
- VENGATESAN M R ET AL: "In situ self-assembled photo-switchable liquid crystal alignment layer using azosilane monomer-liquid crystal mixture system", LIQUID CRYSTALS, TAYLOR & FRANCIS, vol. 40, no. 9, 1 September 2013 (2013-09-01), pages 1227-1237, XP001584623, ISSN: 0267-8292, DOI: 10.1080/02678292.2013.805833 [retrieved on 2013-06-07]
- SHENOY D ET AL: "A Photo-Dimerized Monolayer as a Non-Rubbing Alignment Layer for Liquid Crystal Displays", 1998 SID INTERNATIONAL SYMPOSIUM - MAY 17-22, ANAHEIM, CALIFORNIA, 17 May 1998 (1998-05-17), XP007008791,
- SU YEON OH ET AL: "Photoreactive self-assembled monolayer for the stabilization of tilt orientation of a director in vertically aligned nematic liquid crystals", OPTICS EXPRESS, vol. 21, no. 25, 12 December 2013 (2013-12-12), page 31367, XP055473725, DOI: 10.1364/OE.21.031367
- OGAWA K ET AL: "CONTROL OF PRE-TILT ANGLES OF LIQUID CRYSTAL MOLECULES USING A CHEMICALLY ADSORBED MONOMOLECULAR LAYER AS AN ALIGNMENT FILM IN LIQUID CRYSTAL CELLS", JAPANESE JOURNAL OF APPLIED PHYSICS, JAPAN SOCIETY OF APPLIED PHYSICS, JP, vol. 41, no. 11A, PART 01, 1 November 2002 (2002-11-01), pages 6471-6477, XP001191345, ISSN: 0021-4922, DOI: 10.1143/JJAP.41.6471
- PATRICK S. NOONAN ET AL: "Mixed Alkylsilane Functionalized Surfaces for Simultaneous Wetting and Homeotropic Anchoring of Liquid Crystals", ACS APPLIED MATERIALS & INTERFACES, vol. 3, no. 11, 23 November 2011 (2011-11-23), pages 4374-4380, XP055473730, US ISSN: 1944-8244, DOI: 10.1021/am201026r

## Beschreibung

Die Erfindung betrifft einen elektrisch steuerbaren Interferenzfarbfilter, der mindestens zwei transparente Elektroden, mindestens eine nematische Flüssigkristallschicht sowie Orientierungsschichten für die Orientierung der Flüssigkristalle aufweist, entsprechend Anspruch 1. Durch Anlegen eines elektrischen Feldes kann eine Umorientierung der Flüssigkristalle und damit einhergehend eine Verschiebung des Transmissionswellenlängenbereichs des Interferenzfarbfilters erfolgen.

Generell gibt es zwei Arten von Farbfiltern: Interferenz- und Absorptionsfilter. Elektrisch steuerbare Farbfilter basieren ausschließlich auf dem Interferenzprinzip. Die Arbeitsweise und optische Charakteristik der bereits bekannten Interferenzfarbfiltertypen unterscheiden sich dennoch zum Teil signifikant. Kommerziell sind unter dem Namen "VariSpec-Filter" von der Firma LOT auf dem Lyot-Prinzip basierende elektrisch steuerbare Farbfilter erhältlich. Ein Lyotfilter besteht aus einer Schichtstruktur eines doppelbrechenden Materials und einem nachfolgenden Polarisationsfilter. Sofern das eingestrahlte Licht

nicht bereits linear polarisiert ist, wird ein zusätzlicher Polarisationsfilter vorgeschaltet. Einstufige Lyotfilter sind weder praktikabel noch kommerziell erhältlich. Je mehr Lyotfilter hintereinandergeschaltet werden, desto größer wird der freie Spektralbereich. Im Falle der "VariSpec-Filter" werden Flüssigkristallzellen als elektrisch steuerbare doppelbrechende Materialien verwendet und typischerweise 12 oder mehr Lyotfilter zu einem Filterstapel hintereinandergeschaltet. Konstruktionsbedingt ergibt sich daraus eine Filterdicke von mehreren Zentimetern (typisch 1,5 inch = 3,8 cm). Die komplexe Bauweise und die langsamen Schaltzeiten (>50 ms) sind weitere Nachteile der "VariSpec-Filter". In DE 3727655 A1 wird ein elektrisch steuerbarer Farbmodulationsfilter beschrieben, das ein ferroelektrisches Flüssigkristallmaterial mit einer chiralen smektischen C-Phase enthält. Durch Umorientieren des ferroelektrischen Flüssigkristalls im elektrischen Feld ändert sich zwar die Transmission des beschriebenen Farbmodulationsfilters im sichtbaren Spektralbereich wellenlängensensitiv, ohne jedoch bei einer spezifischen Wellenlänge eine effektive Blockung zu erzielen. Farbfilter basierend auf helikalen cholesterischen LC-Anordnungen wie diese beispielsweise in US 2003/0075721 A1 oder US 2008/0030635 A1 beschrieben sind, und alle mechanisch steuerbaren Farbfilter wie zum Beispiel in US 3,693,115 beschrieben, sind für bewegte Bilder nicht praktikabel. Weitere schaltbare Interferenzfarbfilter werden in den Veröffentlichungen US2009/0322971, EP0357319 und US5425115 dargestellt.

Ausgehend hiervon was es Aufgabe der vorliegenden Erfindung, einen elektrisch steuerbaren Interferenzfarbfilter bereitzustellen, bei dem auf den Einsatz eines Polarisationsfilters verzichtet werden kann und durch elektrische Steuerung die Transmission von unpolarisiertem Licht beeinflusst werden kann.

Diese Aufgabe wird durch den elektrisch steuerbaren Interferenzfarbfilter mit den Merkmalen des Anspruchs 1 gelöst. In den Ansprüchen 9 und 10 werden erfindungsgemäße Verwendungen angegeben.

Die nematische Flüssigkristallschicht des Interfernzfarbfilters weist eine Schichtdicke im Bereich von 100 nm bis 1.000 nm, insbesondere von 500 bis 900 nm auf. Dabei ist der Abstand zwischen zwei benachbarten Resonanzlinien des Interferenzfarbfilters umgekehrt proportional zur Schichtdicke der nematischen Flüssigkristallschicht und der mindestens einen Orientierungsschicht. Um einen ausreichend breiten freien Spektralbereich zwischen zwei Resonanzlinien im sichtbaren Bereich zu erzielen, muss diese Schichtdicke kleiner 2 λ/n erforderlich.

Als Flüssigkristall sind prinzipiell alle nematischen Flüssigkristallstrukturen oder deren Mischungen geeignet: Bevorzugte Strukturen sind Biphenyle, Terphenyle, Quaterphenyle und Tolane wie z. B. Cyano-, Fluoro-, Isothiocyanate von Biphenylen, Terphenylen, Quaterphenylen, Tolanen oder Mischungen hiervon. Da mit steigendem Δn = nₑ - n₀ der Wellenlängenshift des Filters erhöht wird, sollte die Differenz zwischen nₑ und n₀ möglichst groß sein. Ein numerischer Wert von mindestens 5% ist anzustreben, vorzugsweise beträgt dieser 10% und mehr.

Die Auswahl der nematischen Phase mit einer positiven oder negativen Dielektrizitätskonstante ist für den Fachmann ersichtlich unmittelbar gekoppelt mit einer homogen planaren oder senkrechten Orientierung des Flüssigkristalls im off-Modus (siehe u.a. M. Schadt et al., Nature, 381, 212, 1996; oder A. Seeboth, Displays, 20, 131, 1999). Die Orientierungsschichten sind monomolekular. Der Abstand zwischen den dielektrischen Spiegelschichten (103), der sich aus den Dicken der Flüssigkristallschicht (106) und der Orientierungsschichten (105, 105') zusammensetzt, muss entsprechend den optischen Gesetzen (C. K. Madsen and J. H. Zhao, Optical Filter Design and Analysis, John Wiley & Sons, Inc. 1999) für einen Farbfilter gleich/kleiner 2λ/n sein. Mit Zunahme der Schichtdicke einer Orientierungsschicht wird entsprechend die Farbfilterwirkung negativ beeinflusst. Weiterhin sind die Orientierungsschichten chemisch kovalent an die der angrenzenden Festkörperoberflächen der dielektrischen Spiegel gebunden, wie dies für nicht monomolekulare Orientierungsschicht bereits in US 4,842,375 beschrieben ist. Für monomolekulare Orientierungsschichten stellt eine chemische Oberflächenfixierung eine zusätzliche Herausforderung dar. Für die Fixierung der Orientierungsschicht an der Metalloxid-Oberfläche (z.B. SiO₂, Ta₂O₅, Nb₂O₅ oder TiO₂) sind einerseits zwingend chemisch aktive funktionelle Gruppen F wie O-, COO-, NH₂-, SiX₃-, Si(OX)₃- oder SiXₙ(OX)₃ₙ-Gruppe (X= H, CH₃, C₂H₅, Halogen wie F, Cl, Br, I) erforderlich die z. B. mit den Si-O-Si oder Ti-O-Ti Gruppierungen in der Spiegelschicht zu kovalenten Bindungen reagieren können, wie ausführlich beschrieben in H. H. Dunken et al., Physikalische Chemie der Glasoberfläche, VEB Deutscher Verlag für Grundstoffindustrie 1981. Andererseits dürfen diese Struktureinheiten mit den funktionellen Gruppen weder die Topographie noch die Grenzflächenspannung der Orientierungsschicht γOS negativ beeinflussen. Eine homogene Orientierung des Flüssigkristalls und somit ein ausreichender Ordnungsgrad wäre sonst nicht mehr gewährleistet. Ein Füllvorgang des nematischen Flüssigkristalls via Kapillarkraft wäre ebenfalls nicht möglich. Erfindungsgemäß ist die Grenzflächenspannung der Orientierungsschicht γOS und die des Flüssigkristalls γLC, welche beide in bekannter Weise ermittelt werden können (A. Seeboth et al., Colloids and Surfaces A, 78, 177, 1993), vorzugsweise weitestgehend identisch: Δγ = γOS -γLC ≈ 0.

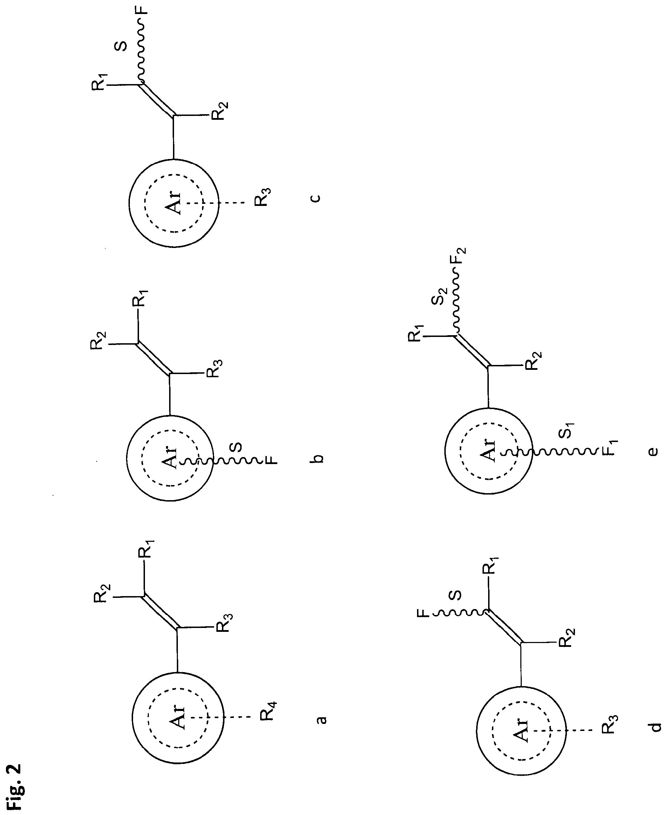

Die Grundstrukturen der erfindungsgemäßen Orientierungsschichten sind Verbindungen mit photoreaktiven Ethengruppen aus der Gruppe Cumar-, Phenylacryl-, 3-(2-Furyl)acryl-, 3-(2-Thienyl)acryl- und trans-Stilben-Derivate, wie in Fig. 2a gezeigt, in der Ar für Phenyl, Naphthyl, Anthryl, Furyl, Thienyl oder einen beliebigen anderen Aromaten steht. Diese Grundstukturen benötigen jedoch zur Fixierung der Orientierungsschicht an die Metalloxid-Oberfläche ergänzend weitere zusätzliche funktionelle Gruppen F, welche via Spacer S entweder an den aromatischen Kern, wie in Fig. 2b, oder an einer beliebigen Stelle des aliphatischen Teils des Hauptmoleküls, wie beispielsweise in Fig. 2c, gekoppelt sind. Es ist ersichtlich, dass der Spacer in Fig. 2c auch alternativ an anderen Stellen angebunden sein kann, z. B. wie in Fig. 2d. Weiterhin können alle möglichen weiteren Kombinationen zum Moleküldesign genutzt werden, wie beispielsweise eine Kopplung sowohl am aliphatischen als auch am aromatischen Molekülteil, wie in Fig. 2e gezeigt. Die in Fig. 2a-2e als R1, R2, R3, R4 bezeichneten Substituenten stehen beispielsweise für Wasserstoff, Halogen (F, Cl, Br, I), Alkyl, Alkyloxy, Cycloalkyl, Phenyl, Naphthyl, Anthryl, Furyl, Thienyl oder einen beliebigen anderen Aromaten. Der Spacer S ist vorzugsweise eine Kohenwasserstoffkette mit 2-8 Kohlenstoffatomen, die beispielsweise mittels Amid-, Ether- oder Esterbrücken unterbrochen sein kann. Die funktionelle Gruppen F ist bevorzugt eine O-, COO-, NH2-, SiX₃-, Si(OX)₃- oder SiXₙ(OX)₃ₙ--Gruppe (X= H, CH3, C2H5, Halogen wie F, Cl, Br, I).

Jeder Substituent R1, R2, R3, R4 kann entweder nur für sich oder in beliebiger Kombination zwischen R1, R2, R3, R4 auftreten.

Die nematische Flüssigkristallschicht steht an beiden Oberflächen in unmittelbarem Kontakt mit jeweils einer Orientierungsschicht. Es ist weiter bevorzugt, dass der Interferenzfarbfilter eine Distanzschicht aufweist, die zumindest eine Ausnehmung aufweist, die die nematische Flüssigkristallschicht aufnimmt. Somit kann über die Distanzschicht die Schichtdicke der nematischen Flüssigkristallschicht eingestellt werden. Dabei wird die Distanzschicht vorzugsweise im Sputterverfahren erzeugt, wodurch sich die Schichtdicke der Distanzschicht mit einer Genauigkeit im einstelligen nm-Bereich einstellen lässt.

Der Interferenzfarbfilter weist zwei dielektrische Spiegelschichten auf. Die dielektrische Spiegelschicht besteht vorzugsweise aus alternierenden Schichtpaaren eines niedrigbrechenden und eines hochbrechenden Materials, wobei n eine ganze positive Zahl ist. Als niedrigbrechendes Material kann z. B. SiO₂ mit einem Brechungsindex von 1,46 bei 589 nm und als hochbrechendes Material Ta₂O₅, Nb₂O₅ oder TiO₂ mit Brechungsindices zwischen 2,15 und 2,45 bei 589 nm verwendet werden. Die Auswahl der genannten dielektrischen Materialien ist für den sichtbaren Spektralbereich optimiert.

Für die Anordnung der dielektrischen Spiegelschichten bestehen zwei Varianten. Bei der ersten Variante kann die dielektrische Spiegelschicht auf der der nematischen Flüssigkristallschicht zugewandten Seite der transparenten Elektroden angeordnet sein. Eine zweite Variante betrifft die Integration der transparenten Elektroden in die dielektrischen Spiegelschichten.

Es ist bevorzugt, dass die transparenten Elektroden ein transparentes elektrisch leitfähiges Material enthalten oder hieraus bestehen.

Beispiele dafür sind Indiumzinnoxid (ITO), Aluminium dotiertes Zinkoxid (AZO), Fluor-Zinn-Oxid (FTO), Antimon-Zinn-Oxid (ATO), Graphen, Silber Nanodrähte und Kohlenstoff-Nanoröhrchen.

Anhand der nachfolgenden Figuren und Beispiele soll der erfindungsgemäße Gegenstand näher erläutert werden, ohne diesen auf die hier gezeigten spezifischen Ausführungsformen einschränken zu wollen.
Fig. 1 zeigt den schematischen Aufbau eines erfindungsgemäßen Interferenzfarbfilters.
Fig. 2 zeigt verschiedene Strukturen für erfindungsgemäß eingesetzte Komponenten für die Orientierungsschichten.
Fig. 3 zeigt anhand eines Diagramms die Verschiebung des Transmissionsbereichs eines erfindungsgemäßen Interferenzfarbfilters in einem für den Lichtdurchlass nicht genutzten Spektralbereich.

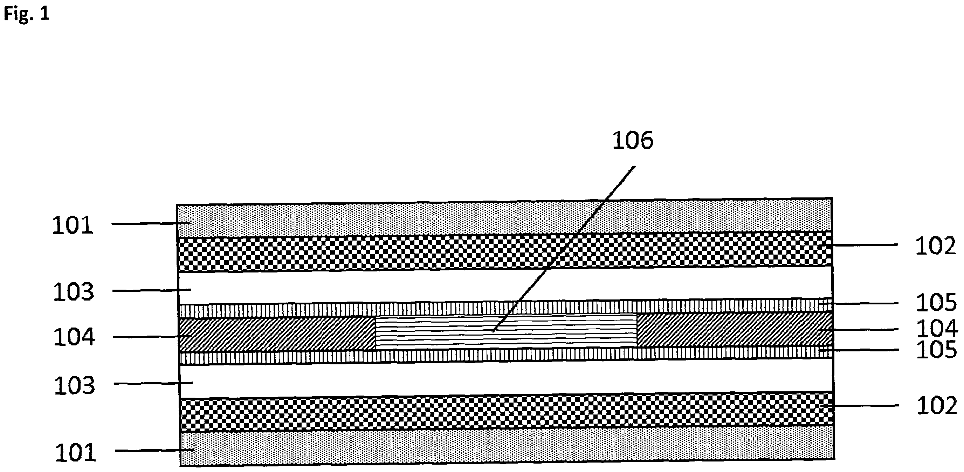

In Fig. 1 ist ein erfindungsgemäßer Interferenzfarbfilter dargestellt, der zwei Orientierungsschichten (105) und (105') aufweist, zwischen denen eine nematische Flüssigkristallschicht (106) angeordnet ist. Die Dicke der nematischen Flüssigkristallschicht (106) wird dabei durch die umliegende Distanzschicht (104) definiert. Auf der von der nematischen Flüssigkristallschicht (106) abgewandten Seite der Orientierungsschichten (105) und (105') sind jeweils die dielektrischen Spiegelschichten (103) und (103') angeordnet. Auf diesen wiederum sind die transparenten Elektroden (102) und (102') abgeschieden. Zusätzlich weist der erfindungsgemäße Interferenzfarbfilter noch äußere Trägerschichten (101) und (101') auf.

### Beispiel 1

Beispiel 1 betrifft ein für grünes Licht mit einer Wellenlänge von 575 nm konzipierter elektrisch steuerbarer Interferenzfarbfilter.

Für das Beispiel wurde kommerzielles ITO-Gläser der Firma Präzisions Glas & Optik GmbH (CEC050P) verwendet mit einem Flächenwiderstand von 40 Ω/□. Die Transmission des ITO-Glases beträgt 80% bei 450 nm und 87% bei 700 nm. Zwei dieser ITO-Gläser werden jeweils mit einer dielektrischen Spiegelschicht (103) beschichtet, die für eine Wellenlänge von 575 nm konzipiert ist. Die dieelektrische Spiegelschicht besteht aus vier SiO₂- und vier Ta₂O₅-Schichten, die startend mit SiO₂ in alternierender Schichtfolge aufgesputtert werden (S[HL]^4 H - 575 nm).

Auf der ersten der beiden hergestellten ITO-Gläser mit Spiegelschicht wird anschließend im Tauchverfahren trans-3-(3-(5-Chlorpentyloxy)phenyl)acrylsäurephenylester kovalent an die Spiegelschichtoberfläche gebunden wodurch sich eine monomolekulare organische Schicht mit photoreaktiven Ethengruppen ausbildet. Durch photochemische Vernetzung mit linear polarisiertem Licht entsteht daraus die strukturierte Oberfläche der Orientierungsschicht (105). Dabei ist anzumerken, dass in der beanspruchten Erfindung auf beiden Spiegelflächen eine monomolekulare Orientierungsschicht ausgebildet wird. Elipsometrische Messungen zeigen, dass die Dicke der Orientierungsschicht, wie für eine monomolekulare Schicht zu erwarten, unterhalb der verfahrensbedingten Nachweisgrenze von 2 nm liegt.

Auf dem zweiten mit Spiegelschicht versehenen ITO-Glas wird die Distanzschicht (104) in Form zweier Stege an gegenüberliegenden Enden des Substrates aufgebracht. Dabei entsteht in der Mitte des Substrates eine Vertiefung, die nach der Montage der beiden Halbzellen (ITO-Glas + Spiegelschicht + Orientierungsschicht / ITO-Glas + Spiegelschicht + Distanzschicht) die Kavität bildet, in der die Flüssigkristallschicht (106) eingefüllt wird. Um die ultradünne Distanzschicht (104) und damit die resultierende ultradünne Flüssigkristallschicht (106) exakt einzustellen zu können, wird die Distanzschicht im SputterVerfahren hergestellt, wobei die Kavitätenfläche mit einer Maske abgedeckt wird. Für das vorliegende Ausführungsbeispiel wurde SiO₂ mit einer Schichtdicke von 753 nm aufgesputtert. Es ergibt sich eine LC-Schicht mit analog 753 nm.

Beide Halbzellen (ITO-Glas + Spiegelschicht + Orientierungsschicht / ITO-Glas + Spiegelschicht + Distanzschicht) werden planparallel nach herkömmlicher LCD-Montagetechnik zum Interferenzfilter zusammengefügt.

Die Kavität des Interferenzfilters wird im letzten Schritt mit einem nematischen Flüssigkristall gefüllt. Im vorliegenden Ausführungsbeispiel wurde dafür ein eutektisches Flüssigkristallgemisch verwendet, das bei Raumtemperatur eine nematische Phase mit Δn = 6% aufweist und dessen Grenzflächenspannung an die der Orientierungsschicht angepasst ist Δγ = γOS -γLC = 0,8 mN/m.

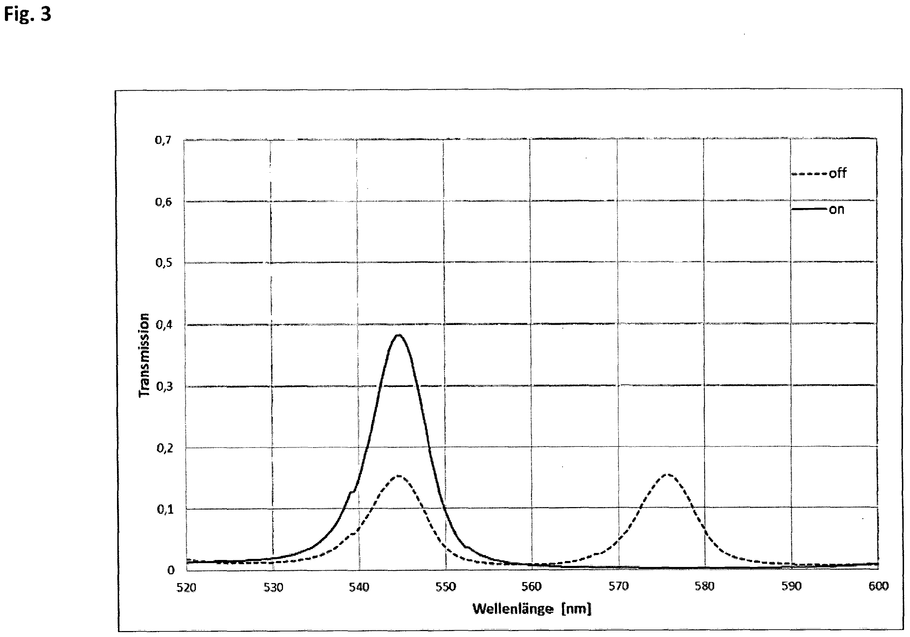

Der so hergestellte Farbfilter kann durch Anlegen einer Spannung von 11 V an dessen ITO-Elektroden geschaltet werden. Die Schaltzeiten des Farbfilters liegen mit tₒₙ= 580 µs und für t_{off}=1,33 ms im µs/ms-Bereich. Wird ein monochromatisches oder schmalbandiges Licht (LED oder Laserdiode) mit einer Zentralwellenlänge von 575 nm als Backlight verwendet, ist der Schalteffekt der Zelle mit einem für das bloße Auge deutlich sichtbaren Schalteffekt von grün nach schwarz verbunden. Im "off"-Zustand ist das Farbfilter für Licht der Wellenlänge 575 nm transparent wohingegen im "on"-Zustand das Backlight praktisch vollständig geblockt wird. Die Durchlasswellenlänge liegt im "on"-Zustand in dem nicht genutzten Spektralbereich. Die Transmissionsspektren des Farbfilters im "off"- und "on"-Zustand sind für den Wellenlängenbereich von 520 nm bis 600 nm in Abbildung 3 gezeigt. Diese Spektren wurden mit unpolarisiertem Licht gemessen.

Im "off"-Zustand weist das Farbfilter im betrachteten Wellenlängenbereich zwei Transmissionspeaks mit Maxima bei 545 nm und 575 nm auf. Der Bereich dazwischen wird als freier Spektralbereich definiert. In Abhängigkeit von der angelegten Spannung verschiebt sich der Peak kontinuierlich von 575 nm zu 545 nm.

### Beispiel 2

Beispiel 2 ist ein für blaues Licht mit einer Wellenlänge von 450 nm konzipierter elektrisch steuerbarer Interferenzfarbfilter. Das Ausführungsbeispiel 2 wurde analog zum Ausführungsbeispiel 1 gefertigt. Zur Anpassung an die geänderte Durchlass-Wellenlänge wurde erstens die Dicke der SiO₂-und Ta₂O₅-Schichten der Spiegelschicht (103) auf 76,36 nm (SiO₂) / 51,07 nm (Ta₂O₅) und zweitens die Dicke der Spacerschicht auf 558 nm geändert. Das so hergestellte Farbfilter schaltet bei einer Spannung von 9,2 V an dessen ITO-Elektroden. Mit einem monochromatisches Backlight schaltet der Farbfilter von blau nach schwarz. Ebenso wie im Ausführungsbeispiel 1 ist der Schalteffekt mit dem bloßen Auge deutlich sichtbar.

### Beispiel 3

Beispiel 3 ist ein für rotes Licht mit einer Wellenlänge von 632 nm konzipierter elektrisch steuerbarer Interferenzfarbfilter. Das Ausführungsbeispiel 3 wurde ebenfalls analog zum Ausführungsbeispiel 1 unter Anpassung der Dicke der SiO₂ und Ta₂O₅-Schichten auf 95,53 nm (SiO2) / 64,12 nm (Ta₂O₅) der Spiegelschicht und der Dicke der Spacerschicht auf 798 nm gefertigt. Das so hergestellte Farbfilter schaltet bei einer Spannung von 11,9 V an dessen ITO-Elektroden. Mit einem monochromatisches Backlight schaltet der Farbfilter von rot nach schwarz. Ebenso wie in den Ausführungsbeispielen 1 und 2 ist der Schalteffekt mit dem bloßen Auge deutlich sichtbar.

Für den Fachmann ist ersichtlich, dass durch eine veränderte Auswahl des nematischen Flüssigkristalls (Variation von Δn, Δε, Viskosität), der Spiegelschichtkonfiguration und Schichtmaterialien (Anzahl der Spiegelschichtpaare, Schichtdicken und dielektrische Eigenschaften der Schichten), Dicke der Flüssigkristallschicht, chemischen Struktur der monomolekularen Orientierungsschicht (Variation der Grenzflächeneigenschaften) die Schaltzeit und Schwellspannung des elektrisch steuerbaren Farbfilters sowohl zu höheren als auch zu niedrigeren Werten verschoben werden kann. Ebenfalls ist ersichtlich, dass der maximale Verschiebungsbereich der Wellenlänge durch Δn bestimmt wird und der genutzte Verschiebungsbereich variabel über die Spannung gesteuert werden kann. Die Ausführungsbeispiele können als Einzelfilter oder als RGB-Filter, auch in Matrixform, genutzt werden.

## Patentansprüche

1. Elektrisch steuerbarer Interferenzfarbfilter enthaltend mindestens zwei transparente Elektroden (102, 102'), zwei Orientierungsschichten (105,105') sowie eine nematische Flüssigkristallschicht (106) zwischen den beiden transparenten Elektroden (102, 102') und Orientierungsschichten (105, 105'), wobei die nematische Flüssigkristallschicht (106) und die zwei Orientierungsschichten (105, 105') zur Orientierung der Flüssigkristalle in unmittelbarem Kontakt stehen, wobei durch Anlegen eines elektrischen Feldes zwischen den beiden transparenten Elektroden (102, 102') der Transmissionswellenlängenbereich des Interferenzfarbfilters durch Umorientierung der Flüssigkristalle verschiebbar ist, wobei die nematische Flüssigkristallschicht (106) eine Schichtdicke im Bereich von 100 nm bis 1000 nm aufweist, wobei der Interferenzfarbfilter zwei dielektrische Spiegelschichten (103, 103'), jeweils eine auf den von der Flüssigkristallschicht (106) abgewandten Seiten der Orientierungsschichten (105, 105'), aufweist, wobei die zwei Orientierungsschichten (105, 105') monomolekular sind und chemisch kovalent an die zwei dielektrischen Spiegelschichten (103, 103') gebunden sind und wobei die Grundstrukturen der zwei Orientierungsschichten (105, 105') ausgewählt sind aus der Gruppe von photoreaktiven Ethengruppen bestehend aus Cumar-, Phenylacryl-, 3-(2-Furyl)acryl-, 3-(2-Thienyl)acryl- und trans-Stilben-Derivaten.

2. Interferenzfarbfilter nach Anspruch 1,
**dadurch gekennzeichnet, dass** die nematische Flüssigkristallschicht (106) eine Schichtdicke im Bereich von 500 nm bis 900 nm aufweist.

3. Interferenzfarbfilter nach einem der Ansprüche 1 oder 2,
**dadurch gekennzeichnet, dass** die nematische Flüssigkristallschicht (106) Flüssigkristalle ausgewählt aus der Gruppe bestehend aus Biphenyle, Terphenyle, Quaterphenyle und Tolane, insbesondere Cyano-, Fluoro-, Isothiocyanate von Biphenylen, Terphenylen, Quaterphenylen oder Tolanen enthält.

4. Interferenzfarbfilter nach einem der Ansprüche 1 bis 3,
**dadurch gekennzeichnet, dass** die Grenzflächenspannung der zwei Orientierungsschichten (105, 105') im Wesentlichen der Grenzflächenspannung der nematischen Flüssigkristallschicht (106) entspricht, mit einer Differenz der Grenzflächenspannung von maximal 1mN/m.

5. Interferenzfarbfilter nach einem der Ansprüche 1 bis 4,
**dadurch gekennzeichnet, dass** der Interferenzfarbfilter eine Distanzschicht (104) aufweist, die zumindest eine Ausnehmung aufweist, die die nematische Flüssigkristallschicht (106) aufnimmt.

6. Interferenzfarbfilter nach einem der Ansprüche 1 bis 5,
**dadurch gekennzeichnet, dass** die zwei Spiegelschichten (103, 103') aus mehreren Schichtpaaren aus einem Material mit einem Brechungsindex < 1,5, insbesondere SiO₂, und einem Material mit einem Brechungsindex > 2,0, insbesondere Ta₂O₅, Nb₂O₅ oder TiO₂, besteht.

7. Interferenzfarbfilter nach einem der Ansprüche 1 bis 6,
**dadurch gekennzeichnet, dass** die transparente Elektroden (102, 102') in die dielektrischen Spiegelschichten (103, 103') integriert sind.

8. Interferenzfarbfilter nach einem der Ansprüche 1 bis 7,
**dadurch gekennzeichnet, dass** die transparenten Elektroden (102, 102') ein transparentes elektrisch leitfähiges Material enthalten oder hieraus bestehen, insbesondere Indiumzinnoxid (ITO), Aluminium dotiertes Zinkoxid (AZO), Fluor-Zinn-Oxid (FTO), Antimon-Zinn-Oxid (ATO), Graphen, Silber-Nanodrähte oder Kohlenstoff-Nanoröhrchen.

9. Verwendung des Interferenzfarbfilters nach einem der Ansprüche 1 bis 8 als schaltbarer Barrierefilter für definierte Wellenlängenbereiche.

10. Verwendung nach Anspruch 9, **dadurch gekennzeichnet, dass** der Interferenzfarbfilter zur schaltbaren Blockierung und Transmission von Hintergrundlicht, insbesondere von Leuchtdioden oder Laserdioden, eingesetzt wird.

## Claims

1. Electrically controllable interference colour filter, comprising at least two transparent electrodes (102, 102'), two orientation layers (105, 105') as well as a nematic liquid crystal layer (106) between both transparent electrodes (102, 102') and orientation layers (105, 105'), wherein the nematic liquid crystal layer (106) and the two orientation layers (105, 105') being in direct contact for orientation of the liquid crystals, wherein by applying an electrical field between both transparent electrodes (102, 102') the transmission wavelength range of the interference colour filter is displaceable by reorientation of the liquid crystals, wherein the nematic liquid crystal layer (106) has a layer thickness in the range of 100 nm to 1,000 nm, wherein the interference colour filter has two dielectric reflective layers (103, 103'), one each on the side of the orientation layers (105, 105') opposite to the liquid crystal layer (106), wherein the two orientation layers (105, 105') are monomolecular and bonded chemically covalently to the two dielectric reflective layers (103, 103') and wherein the base structures of the two orientation layers (105, 105') are selected from the group of photo reactive ethane groups consisting of coumar-, phenylacryl-, 3-(2-furyl)acryl, 3-(2-thienyl)acryl- and trans-stilbene derivatives.

2. Interference colour filter according to claim 1,
wherein the nematic liquid crystal layer (106) has a layer thickness in the range of 500 nm to 900 nm.

3. Interference colour filter according to one of the claims 1 or 2,
wherein the nematic liquid crystal layer (106) comprises liquid crystals selected from the group consisting of biphenyls, terphenyls, quaterphenyls and tolanes, in particular cyano, fluoro-, isothiocyanates of biphenylene, terphenylene, quaterphenylene or tolanes.

4. Interference colour filter according to one of the claims 1 to 3,
wherein the interface tension of the two orientation layers (105, 105') corresponds essentially to the interface tension of the nematic liquid crystal layer (106), with a difference in interface tension of at most 1 mN/m.

5. Interference colour filter according to one of the claims 1 to 4,
wherein the interference colour filter has a distance layer (104) which has at least one recess which receives the nematic liquid crystal layer (106).

6. Interference colour filter according to one of claims 1 to 5,
wherein the two dielectric reflective layers (103, 103') consists of a several pairs of layers made of a material with a refractive index < 1.5, in particular SiO₂, and a material with a refractive index > 2.0, in particular Ta₂O₅, Nb₂O₅ or TiO₂.

7. Interference colour filter according to one of the claims 1 to 6,
wherein the transparent electrodes (102, 102') are integrated in the dielectric reflective layers (103, 103').

8. Interference colour filter according to one of the claims 1 to 7,
wherein the transparent electrodes (102, 102') comprise a transparent electrically conductive material or consist thereof, in particular indium-tin oxide (ITO), aluminium-doped zinc oxide (AZO), fluorine-tin oxide (FTO), antimony-tin oxide (ATO), graphene, silver nanowires or carbon nanotubes.

9. Use of the interference colour filter according to one of the claims 1 to 8 as switchable barrier filter for defined wavelength ranges.

10. Use according to claim 9,
wherein the interference colour filter is used for switchable blocking and transmission of background light, in particular from light diodes or laser diodes.

## Revendications

1. Filtre interférentiel couleur réglable électriquement contenant au moins
deux électrodes transparentes (102, 102'), deux couches d'orientation (105, 105'), ainsi qu'une couche de cristaux liquides nématiques (106) entre les deux électrodes transparentes (102, 102') et les couches d'orientation (105, 105'), la couche de cristaux liquides nématiques (106) et les deux couches d'orientation (105, 105') étant, pour l'orientation des cristaux liquides, en contact direct, l'application d'un champ électrique entre les deux électrodes transparentes (102, 102') permettant de décaler, par réorientation des cristaux liquides, la gamme de longueurs d'onde de transmission du filtre interférentiel couleur, la couche de cristaux liquides nématiques (106) présentant une épaisseur de couche comprise dans la plage de 100 nm à 1000 nm, le filtre interférentiel couleur présentant deux couches miroirs diélectriques (103, 103'), chacune sur les côtés, opposés à la couche de cristaux liquides (106), des couches d'orientation (105, 105'), les deux couches d'orientation (105, 105') étant monomoléculaires et étant liées par liaison covalente aux deux couches miroirs diélectriques (103, 103'), et les structures de base des deux couches d'orientation (105, 105') étant choisies dans le groupe des groupes éthène photoréactifs consistant en les dérivés de la coumarine, phénylacryliques, trans-(2-furyl)acryliques, 3-(2-thiényl)acryliques et de trans-stilbène.

2. Filtre interférentiel couleur selon la revendication 1, **caractérisé en ce que** la couche de cristaux liquides nématiques (106) présente une épaisseur de couche comprise dans la plage de 500 nm à 900 nm.

3. Filtre interférentiel couleur selon l'une des revendications 1 ou 2, **caractérisé en ce que** la couche de cristaux liquides nématiques (106) contient des cristaux liquides choisis dans le groupe consistant en les biphényles, les terphényles, les quaterphényles et les tolanes, en particulier les cyano-, les fluoro-, les isothiocyanates de biphényles, de terphényles, de quaterphényles ou de tolanes.

4. Filtre interférentiel couleur selon l'une des revendications 1 à 3, **caractérisé en ce que** la tension interfaciale des deux couches d'orientation (105, 105') correspond pour l'essentiel à la tension interfaciale de la couche de cristaux liquides nématiques (106), avec une différence, entre les tensions interfaciales, au maximum de 1 mN/m.

5. Filtre interférentiel couleur selon l'une des revendications 1 à 4, **caractérisé en ce que** le filtre interférentiel couleur présente une couche d'écartement (104), qui présente au moins un évidement qui reçoit la couche de cristaux liquides nématiques (106).

6. Filtre interférentiel couleur selon l'une des revendications 1 à 5, **caractérisé en ce que** les deux couches miroirs (103, 103') sont constituées de plusieurs paires de couches en un matériau présentant un indice de réfraction < 1,5, en particulier SiO₂, et en un matériau présentant un indice de réfraction > 2,0, en particulier Ta₂O₅, Nb₂O₅ ou TiO₂.

7. Filtre interférentiel couleur selon l'une des revendications 1 à 6, **caractérisé en ce que** les électrodes transparentes (102, 102') sont intégrées dans les couches miroirs diélectriques (103, 103').

8. Filtre interférentiel couleur selon l'une des revendications 1 à 7, **caractérisé en ce que** les électrodes transparentes (102, 102') contiennent un matériau transparent électriquement conducteur ou en sont constituées, en particulier l'oxyde d'indium et d'étain (ITO), l'oxyde de zinc dopé à l'aluminium (AZO), l'oxyde de fluor et d'étain (FTO), l'oxyde d'antimoine et d'étain (ATO), le graphène, les nanofils d'argent ou les nanotubes de carbone.

9. Utilisation du filtre interférentiel couleur selon l'une des revendications 1 à 8 en tant que filtre barrière commutable pour des gammes de longueurs d'onde définies.

10. Utilisation selon la revendication 9, **caractérisée en ce que** le filtre interférentiel couleur est utilisé pour le blocage et la transmission commutables de la lumière de fond, en particulier de diodes électroluminescentes ou de diodes laser.
